# FASCICULE DE BREVET EUROPEEN

(11) **EP 3 987 213 B1**
(45) Date de publication et mention de la délivrance du brevet: **23.04.2025**
(21) Numéro de dépôt: 20742360.9
(22) Date de dépôt: 17.06.2020
(51) Int. Cl.: F16L 53/37, F16L 59/14, F16L 39/00

(54) **CONDUITE SOUS-MARINE CHAUFFANTE POUR LE TRANSPORT DE FLUIDES ET PROCÉDÉ D'ASSEMBLAGE D'UNE TELLE CONDUITE**
BEHEIZTES UNTERWASSERROHR ZUM TRANSPORT VON FLUIDEN UND VERFAHREN ZUR MONTAGE SOLCH EINES ROHRS
UNDERWATER HEATED PIPE FOR THE TRANSPORT OF FLUIDS AND METHOD FOR ASSEMBLING SUCH A PIPE

(30) Priorité: 24.06.2019 FR 1906802
(43) Date de publication de la demande: 27.04.2022
(73) Titulaire: SAIPEM S.A, 78180 Montigny Le Bretonneux (FR)
(72) Inventeur: GENTIL, Frédéric, 78180 MONTIGNY LE BRETONNEUX (FR); HALLOT, Raymond, 78960 VOISINS LE BRETONNEUX (FR); VALDENAIRE, Thomas, 92400 COURBEVOIE (FR)
(74) Mandataire: Cabinet Beau de Loménie
(86) Numéro de dépôt international: PCT/FR2020/051050
(87) Numéro de publication internationale: WO 2020/260802

(56) Documents cités:
- WO-A1-2015/171902
- WO-A1-2016/000716
- FR-A1- 2 722 359
- GB-A- 2 084 284

## Description

### Domaine Technique

La présente invention se rapporte au domaine général du chauffage électrique des conduites de transport de fluides en eaux profondes, et en particulier des conduites sous-marines reposant au fond de la mer et assurant le transport d'hydrocarbures sous-marins, notamment de pétrole et de gaz.

L'invention concerne plus particulièrement les conduites sous-marines à simple enveloppe.

### Technique antérieure

Dans un même champ de production d'hydrocarbures offshore, il est courant d'exploiter plusieurs puits qui peuvent être séparés les uns des autres de plusieurs kilomètres, voire dizaines de kilomètres. Les fluides issus de ces différents puits doivent être collectés par des conduites sous-marines métalliques (typiquement en acier) posées au fond de la mer et transférés par des conduites de liaison fond/surface vers une installation de surface, par exemple une plateforme, un navire ou un point de collecte terrestre, qui va les recueillir pour les stocker (et éventuellement les traiter).

Les fluides issus des puits de production ont tendance à se refroidir rapidement en parcourant les nombreux kilomètres de conduites sous-marines ou lors d'arrêts de production. Or, si aucune disposition n'est prise pour conserver une température de seuil minimale à l'intérieur de ces conduites, le risque est important que les molécules de gaz, notamment le méthane, contenus dans les fluides transportés se combinent aux molécules d'eau pour former, à basse température, des cristaux d'hydrates. Ces derniers peuvent coller aux parois, s'y agglomérer et conduire à la formation de bouchons capables de bloquer la circulation des fluides à l'intérieur des conduites. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la circulation.

Dans le cas de conduites sous-marines dites « à simple enveloppe », il est connu de recourir à des solutions passives ou actives pour tenter de remédier à ce problème. Dans le cas d'une solution passive, il est par exemple est connu de positionner autour de la conduite une couche externe d'isolation thermique, typiquement une gaine polymérique, cette couche se retrouvant en contact direct avec l'eau de mer.

Dans le cas d'une solution active, il est connu de recourir à une solution de chauffage. La solution la plus répandue consiste à chauffer la conduite sous-marine par l'application d'un courant électrique alternatif directement sur l'enveloppe interne en acier de la conduite, cette enveloppe étant reliée à chaque extrémité de la conduite à un câble électrique. L'enveloppe interne n'est pas isolée électriquement de l'eau de mer dans laquelle la conduite est immergée, conduisant à de forts courants circulant dans cette eau de mer et réduisant fortement l'efficacité de la solution.

Dans le cas de conduites sous-marines dites « à double enveloppe » de type « Pipe In Pipe » ou PIP dans lesquelles une enveloppe interne transporte les fluides et une enveloppe externe coaxiale à l'enveloppe interne est en contact avec l'eau de mer, il est également connu de recourir à des solutions passives ou actives pour tenter de remédier aux problèmes liés au refroidissement du fluide.

Dans le cas d'une solution passive, il est par exemple connu de positionner entre les enveloppes interne et externe une couche d'isolation thermique. Cette couche possède de très bonnes performances thermiques, car protégée mécaniquement des milieux environnant par les deux enveloppes.

L'une des solutions actives consiste à chauffer l'enveloppe interne de la conduite grâce à des câbles électriques, ronds ou plats, qui sont disposés autour de l'enveloppe interne sur toute sa longueur pour la chauffer par effet Joule. La puissance électrique qui est fournie aux câbles électriques provient d'un générateur électrique externe raccordé aux câbles par un ombilical. Cette solution de chauffage électrique qui est appelée « chauffage par traçage » ou « chauffage tracé » (« heat tracing » en anglais) permet de maintenir les fluides transportés dans les conduites à une température supérieure à un seuil critique sur tout leur trajet depuis le puits de production jusqu'à l'installation de surface, ainsi que lors d'arrêts de la production. Une autre solution active connue consiste à chauffer la conduite sous-marine par l'application d'un courant électrique alternatif directement sur l'enveloppe interne en acier de la conduite, l'enveloppe externe également réalisée en acier étant utilisée comme un conducteur pour le chemin retour du courant électrique. Le courant électrique alternatif qui parcourt l'enveloppe interne permet ainsi de chauffer celle-ci par effet de Joule. Plus précisément, le chauffage de l'enveloppe interne est produit par effet Joule par le courant qui la traverse ; la chaleur produite est en grande partie transmise aux fluides dans l'enveloppe interne, les pertes thermiques au travers de l'isolant remplissant l'espace annulaire entre l'enveloppe interne et l'enveloppe externe étant relativement réduites. Cette solution de chauffage électrique est appelée en anglais « Direct Electrical Heating » (ou DEH) pour chauffage électrique direct.

Le document WO 2011/138596 décrit l'application d'une telle solution active de chauffage électrique à une conduite sous-marine à simple enveloppe. Dans ce document, la conduite comprend un tube de transport des fluides autour duquel est positionnée une grille externe pour le transport du courant électrique, une couche intermédiaire d'isolation électrique étant intercalée entre le tube et la grille.

Cette solution présente cependant un certain nombre d'inconvénients, notamment de fiabilité du fait de la présence de la grille externe utilisée pour le transport du courant électrique qui n'est pas étanche à une éventuelle invasion d'eau dont les conséquences peuvent aller jusqu'à une panne complète du système de chauffage.

Le document GB2084284 décrit une conduite composée d'un tuyau de protection extérieur et d'un tuyau de transport d'huile intérieur, ces tuyaux étant constitués d'un matériau ferromagnétique et reliés à une source de courant alternatif à une extrémité pour générer de la chaleur, le tuyau intérieur étant recouvert d'une couche d'un matériau isolant électrique et thermique et le tuyau extérieur étant recouvert d'une couche de béton.

### Exposé de l'invention

L'invention a donc pour objet de proposer une solution de chauffage pour une conduite à simple enveloppe qui ne présente pas les inconvénients précités. Conformément à l'invention, ce but est atteint grâce à une conduite sous-marine chauffante pour le transport de fluides, comprenant une pluralité de sections de conduite mises bout à bout par raboutage, chaque section de conduite comprenant :
un tube de transport destiné à recevoir les fluides à transporter,
une couche interne d'isolation électrique disposée autour du tube de transport en le recouvrant,
un tube d'étanchéité réalisé en matériau conducteur de l'électricité, disposé autour de la couche interne d'isolation électrique en la recouvrant,
une couche externe d'isolation thermique disposée autour du tube d'étanchéité en le recouvrant,
le tube de transport étant relié électriquement au tube d'étanchéité à chacune des deux extrémités de la conduite,
la conduite comprenant en outre deux câbles électriques raccordés d'une part à un générateur électrique et d'autre part au tube de transport et au tube d'étanchéité de la conduite en un point situé entre les deux extrémités de la conduite de façon à réaliser deux circuits électriques parallèles parcourus chacun par un courant électrique pour chauffer le tube de transport de la conduite par effet Joule.

La conduite selon l'invention est remarquable en ce qu'elle prévoit un système de chauffage électrique dans lequel le tube d'étanchéité réalisé en matériau conducteur de l'électricité qui permet le transport du courant électrique est parfaitement étanche à l'eau, ce qui évite toute invasion d'eau. Par ailleurs, la solution selon l'invention présente l'avantage d'avoir une très grande efficacité de chauffage, de l'ordre de 85% à 90% du courant électrique injecté qui participe au chauffage du fluide transporté (pour un taux de moins de 60% pour les solutions de chauffage électrique connues de l'art antérieur dans le cas de conduites sous-marines « à simple enveloppe »).

Ainsi, l'invention permet de pouvoir installer des conduites sous-marines chauffantes dans des profondeurs d'eau très élevées avec une bonne efficacité de chauffage et une grande fiabilité.

De préférence, les câbles électriques sont raccordés au tube de transport et au tube d'étanchéité de la conduite en un point situé à équidistance des deux extrémités de la conduite. Cette disposition permet d'obtenir une grande homogénéité de chauffage le long de la conduite.

De préférence également, le tube d'étanchéité est réalisé dans un matériau dont la perméabilité magnétique et la conductivité électrique sont telles que le courant électrique généré par le générateur électrique circule majoritairement le long d'une face interne du tube d'étanchéité. Ainsi, les potentielles fuites de courant dans l'eau de mer sont réduites, augmentant l'efficacité du système.

De préférence encore, le tube d'étanchéité est réalisé en acier au carbone, le tube de transport est réalisé en acier au carbone, la couche interne d'isolation électrique est réalisée en polymère, et la couche externe d'isolation thermique est réalisée à base de polypropylène, de polyuréthane, de polydicyclopentadiène ou de polystyrène.

Pour une section de conduite ayant une longueur de 12m à 48m, le tube de transport peut présenter une épaisseur comprise entre 5mm et 50mm, la couche interne d'isolation électrique présenter une épaisseur comprise entre 6mm et 20mm, le tube d'étanchéité présenter une épaisseur comprise entre 1mm et 10mm, et la couche externe d'isolation thermique présenter une épaisseur comprise entre 20mm et 150mm.

De préférence encore, la conduite comprend en outre une pluralité de liaisons mécaniques entre les tubes de transport et les tubes d'étanchéité de la conduite afin de permettre la transmission d'efforts axiaux entre ces tubes.

L'invention a également pour objet un procédé d'assemblage d'une conduite telle que définie précédemment, comprenant successivement, pour deux sections de conduite attenantes, la mise en place autour du tube d'étanchéité de l'une des deux sections de conduite d'un manchon annulaire d'étanchéité, le soudage des tubes de transport respectifs des deux sections de conduite au niveau d'une de leurs extrémités libres, le déplacement et le soudage du manchon d'étanchéité aux tubes d'étanchéité respectifs des deux sections de conduite, l'insertion d'un raccord de couche interne d'isolation électrique sous le manchon d'étanchéité ; et la mise en place d'un raccord de couche externe d'isolation thermique autour du manchon d'étanchéité.

De préférence, le procédé comprend en outre la réalisation d'une pluralité de liaisons mécaniques entre les tubes de transport et les tubes d'étanchéité de la conduite afin de permettre la transmission d'efforts axiaux entre ces tubes.

Les liaisons mécaniques peuvent être réalisées par matriçage annulaire des tubes d'étanchéité de la conduite pour former le long de la conduite une pluralité de surfaces annulaires de contact entre les tubes d'étanchéité et les couches internes d'isolation électrique.

Alternativement, les liaisons mécaniques peuvent être réalisées par l'intermédiaire de formes particulières de certains manchons d'étanchéité. Dans ce cas, certains manchons d'étanchéité peuvent présenter une forme conique au niveau d'une surface externe ou un crénelage au niveau d'une surface interne.

### Brève description des dessins

[Fig. 1] La figure 1 est une vue schématique et en coupe longitudinale d'une conduite sous-marine selon l'invention.
[Fig. 2] La figure 2 représente une première étape du procédé d'assemblage d'une conduite selon l'invention.
[Fig. 3] La figure 3 représente une autre étape du procédé d'assemblage d'une conduite selon l'invention.
[Fig. 4] La figure 4 représente une autre étape du procédé d'assemblage d'une conduite selon l'invention.
[Fig. 5] La figure 5 représente une autre étape du procédé d'assemblage d'une conduite selon l'invention.
[Fig. 6] La figure 6 représente une autre étape du procédé d'assemblage d'une conduite selon l'invention.
[Fig. 7] La figure 7 représente une autre étape du procédé d'assemblage d'une conduite selon l'invention.
[Fig. 8] La figure 8 représente une autre étape du procédé d'assemblage d'une conduite selon l'invention.
[Fig. 9] La figure 9 représente une étape supplémentaire du procédé d'assemblage selon l'invention comprenant la réalisation de liaisons mécaniques entre les tubes de transport et d'étanchéité.
[Fig. 10] La figure 10 représente une variante de réalisation de l'étape illustrée par la figure 9.
[Fig. 11] La figure 11 représente une autre variante de réalisation de l'étape illustrée par la figure 9.

### Description des modes de réalisation

L'invention concerne le chauffage électrique direct de toute conduite à simple enveloppe terrestre ou sous-marine de transport de fluides, et notamment au chauffage électrique direct des conduites sous-marines en acier à simple enveloppe reposant au fond de la mer et assurant un transport entre des puits de production d'hydrocarbures sous-marins, notamment de pétrole et de gaz, et une installation de surface.

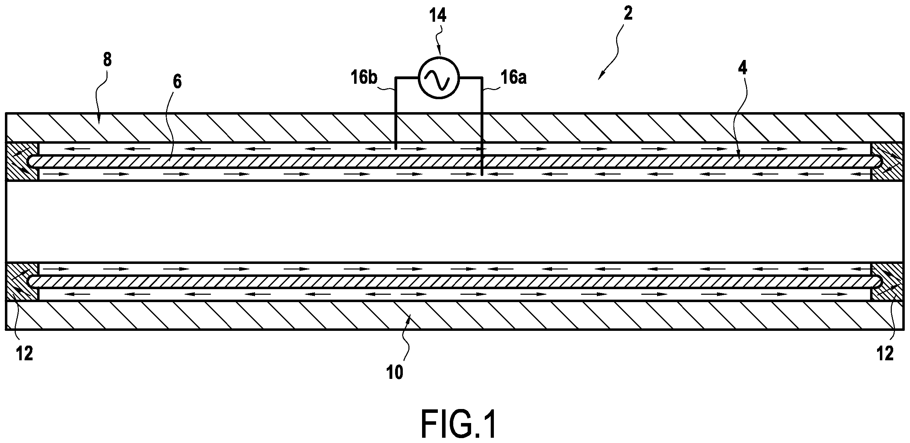

Un exemple de conduite sous-marine à simple enveloppe est représenté sur la figure 1 (dessin qui n'est pas à l'échelle). Typiquement, la conduite 2 comprend notamment un tube interne de transport 4 destiné à recevoir les fluides à transporter.

Ce tube de transport 4 a deux fonctions principales, à savoir la circulation des fluides et le chauffage par effet Joule lorsqu'il est parcouru par un courant électrique. Il est de préférence réalisé en acier au carbone.

La conduite 2 comprend également une couche interne d'isolation électrique 6 qui est disposée autour du tube de transport 4 en le recouvrant, et un tube d'étanchéité 8 qui est réalisé en matériau conducteur de l'électricité et qui est disposé autour de la couche interne d'isolation électrique 6 en la recouvrant.

Enfin, la conduite 2 comprend encore une couche externe d'isolation thermique 10 qui est disposée autour du tube d'étanchéité 8 en le recouvrant.

La couche interne d'isolation électrique 6 a pour fonction d'isoler électriquement le tube de transport 4 du tube d'étanchéité 8. Elle est constituée dans n'importe quel matériau ayant une rigidité diélectrique suffisante et peu compressible afin d'éviter une déformation trop importante du tube d'étanchéité qui l'entoure lorsque ce dernier est soumis à la pression hydrostatique extérieure. Par exemple, la couche interne d'isolation électrique 6 est réalisée dans un polymère.

Le tube d'étanchéité 8 a deux fonctions principales, à savoir la circulation de courant électrique et l'étanchéité de l'espace annulaire entre lui-même et le tube de transport afin d'éviter toute infiltration d'eau de mer.

Compte-tenu de cette double fonction, le tube d'étanchéité est un tube plein, c'est-à-dire qu'il ne présente aucun espace ou interstice au travers duquel pourrait s'infiltrer l'eau de mer.

Le tube d'étanchéité 8 est réalisé dans un matériau dont la perméabilité magnétique et la conductivité électrique sont telles que le courant électrique de chauffage circule majoritairement le long de sa face interne. Par exemple, le tube d'étanchéité est réalisé en acier au carbone.

La couche externe d'isolation thermique 10 a pour fonction d'assurer une protection passive contre le refroidissement des fluides transportés. Elle est typiquement réalisée à base de polypropylène, de polyuréthane, de polydicyclopentadiène ou de polystyrène.

Selon l'invention, le tube de transport 4 est relié électriquement au tube d'étanchéité 8 à chacune des deux extrémités de la conduite au moyen de connecteurs électriques annulaires 12. Par exemple, ces connecteurs électriques sont réalisés en acier au carbone.

Toujours selon l'invention, la conduite 2 comprend en outre un générateur de courant électrique 14 qui est raccordé, d'une part au tube de transport 4 par un premier câble électrique 16a, et d'autre part au tube d'étanchéité 6 de la conduite par un second câble électrique 16b.

Ce raccord électrique est réalisé en un point situé entre les deux extrémités de la conduite de façon à réaliser deux circuits électriques parallèles parcourus chacun par un courant électrique (les flèches sur la figure 1 représentent un exemple de courant électrique circulant dans ces deux circuits).

De façon connue, la circulation de ces courants électriques permet de chauffer le tube de transport 4 ainsi que le tube d'étanchéité 8 de la conduite par effet Joule.

De préférence, le point de raccord électrique est situé à équidistance des deux extrémités de la conduite de façon à obtenir un chauffage homogène de toute la conduite.

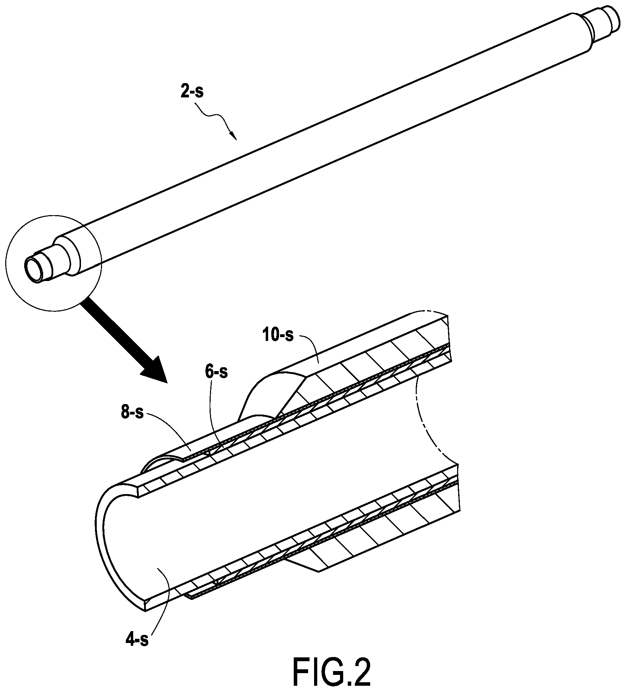

En liaison avec les figures 2 à 11, on décrira maintenant un procédé d'assemblage d'une telle conduite sous-marine.

En guise d'introduction, il est à noter que la conduite selon l'invention s'applique à tout type connu d'assemblage et de pose d'une conduite sous-marine, et notamment à une pose en J, pose en S, pose en déroulé, etc.

Dans l'exemple décrit ci-après, on s'intéressera plus particulièrement à une pose en J de la conduite qui présente l'avantage de procurer une grande flexibilité en termes de profondeur d'installation et de diamètre de la conduite. Une pose en S suivrait un procédé d'assemblage relativement similaire.

De façon connue, une telle pose en J nécessite de fabriquer au préalable une pluralité de sections de conduite 2-s telle que celle représentée sur la figure 2, chaque section ayant typiquement une longueur de 12 à 48m.

Chaque section de conduite 2-s comprend (de l'intérieur vers l'extérieur) : une section de tube de transport 4-s, une section de couche interne d'isolation électrique 6-s, une section de tube d'étanchéité 8-s, et une section de couche externe d'isolation thermique 10-s, ces sections correspondant aux éléments de la conduite selon l'invention décrits précédemment.

On notera ici que pour une section de conduite de 12 à 48m de longueur, la section de tube de transport 4-s présente une épaisseur comprise entre 5mm et 50mm, la section de couche interne d'isolation électrique 6-s présente une épaisseur comprise entre 3mm et 15mm, la section de tube d'étanchéité 8-s présente une épaisseur comprise entre 1mm et 10mm, et la section de couche externe d'isolation thermique 10-s présente une épaisseur comprise entre 20mm et 150mm.

L'étape suivante du procédé d'assemblage consiste à assembler à terre ou directement en mer sur le bateau de pose plusieurs sections de conduite 2-s en tronçons de conduite de plus grande longueur.

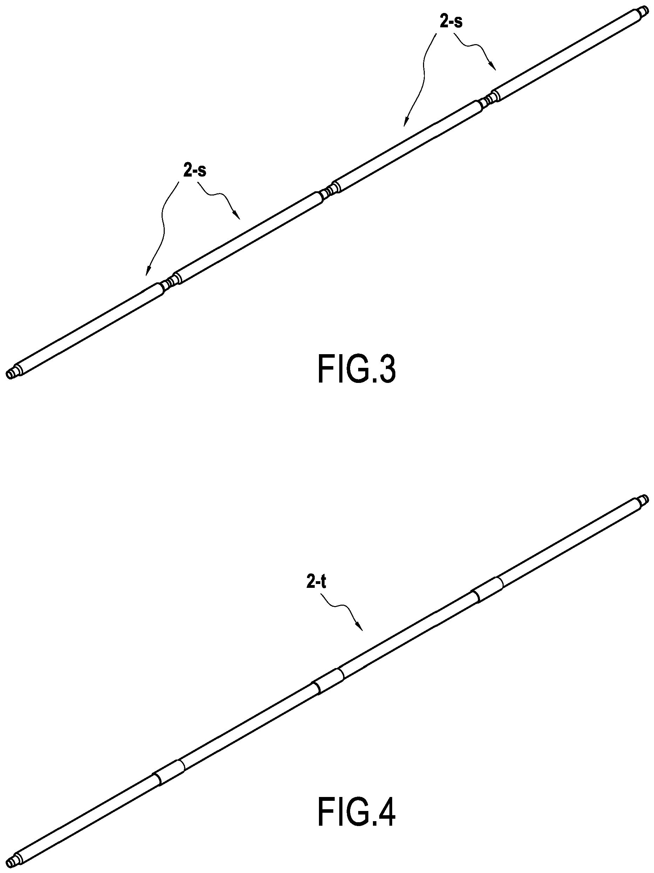

A titre d'exemple, comme représenté sur la figure 3, on pourra assembler bout à bout quatre sections de conduite 2-s pour former un tronçon de conduite.

Après avoir reconstitué les différentes couches autour des liaisons de sections de tube de transport (selon un procédé détaillé ci-après), on obtient un tronçon de conduite 2-t tel qu'illustré sur la figure 4 et usuellement dénommé « quadjoint » en anglais.

Une fois les tronçons de conduite (ou « quadjoint ») ainsi constitués, la conduite peut être installée en mer en connectant ces derniers bout à bout, la connexion des différents tronçons de conduite s'effectuant typiquement dans une rampe de guidage vertical.

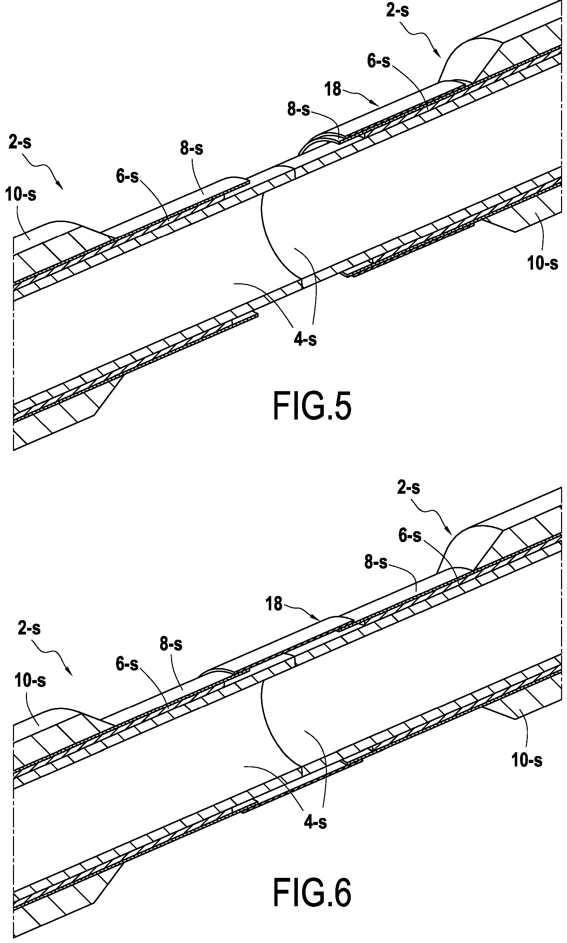

En liaison avec les figures 5 à 11, on décrira en détails la façon dont deux sections de conduite 2-s sont raccordées l'une à l'autre. Le même procédé est utilisé pour raccorder entre eux deux tronçons de conduite 2-t

Dans un premier temps, comme représenté sur la figure 5, on vient mettre en place autour de la section de tube d'étanchéité 8-s de l'une des deux sections de conduite 2-s un manchon annulaire d'étanchéité 18.

Le manchon d'étanchéité 18 est réalisé dans un matériau conducteur de l'électricité, et de préférence dans le même matériau que le tube d'étanchéité de la conduite.

Les deux sections de conduite sont mises bout à bout et les extrémités libres respectives de leur section de tube de transport 4-s sont soudées l'une à l'autre.

Comme représenté sur la figure 6, le manchon d'étanchéité 18 est déplacé pour venir recouvrir le cordon de soudure entre les sections de tube de transport. Le manchon d'étanchéité 18 est alors soudé à chacune de ses extrémités libres aux sections des tubes d'étanchéité respectifs des deux sections de conduite afin d'assurer la continuité du tube d'étanchéité.

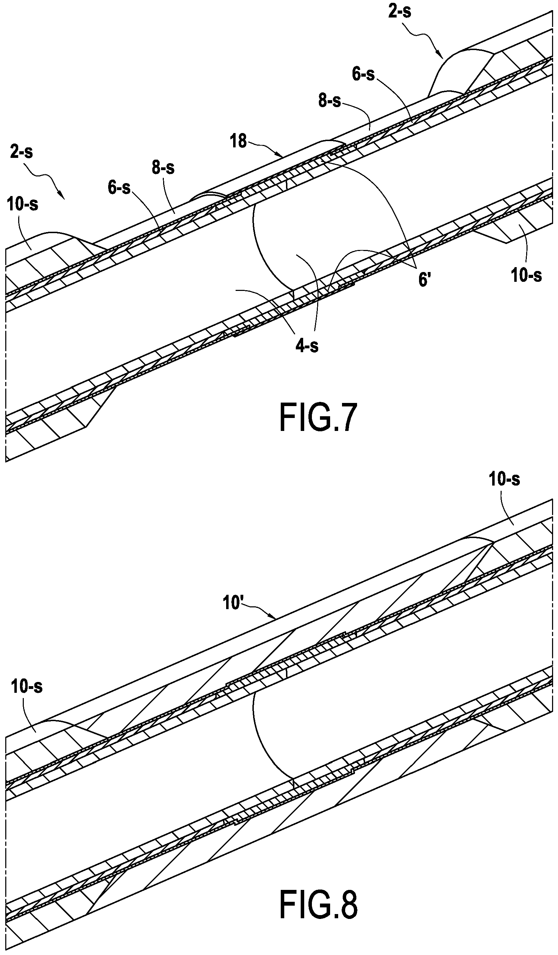

Par ailleurs, il est possible de reconstituer la couche interne d'isolation électrique sous le manchon d'étanchéité 18. Par exemple, comme représenté sur la figure 7, il est possible d'insérer un raccord de couche interne d'isolation 6' sous le manchon d'étanchéité 18 par moulage, le manchon d'étanchéité et les sections de tube de transport 4-s et de tube d'étanchéité 8-s agissant comme un moule.

A cet effet, il convient de disposer d'un système d'injection adapté par l'intermédiaire par exemple d'une ou plusieurs ouvertures dans le manchon d'étanchéité qui sont ensuite bouchées.

Enfin, comme représenté sur la figure 8, l'isolation thermique est reconstituée en mettant en place un raccord de couche externe d'isolation thermique 10' autour du manchon d'étanchéité 18.

Par ailleurs, lors de l'assemblage de la conduite, il est important de s'assurer de l'absence de tout mouvement relatif entre le tube de transport et le tube d'étanchéité que lorsque la conduite sera positionnée verticalement dans la rampe de guidage.

En effet, la couche interne d'isolation électrique de la conduite présente une adhésion forte sur le tube de transport, mais le tube d'étanchéité n'a a priori qu'un contact frictionnel avec cette couche interne d'isolation électrique.

Aussi, de façon avantageuse, il est prévu de réaliser une pluralité de liaisons mécaniques entre le tube de transport 4 et le tube d'étanchéité 8 de la conduite afin de permettre la transmission d'efforts axiaux entre ces tubes.

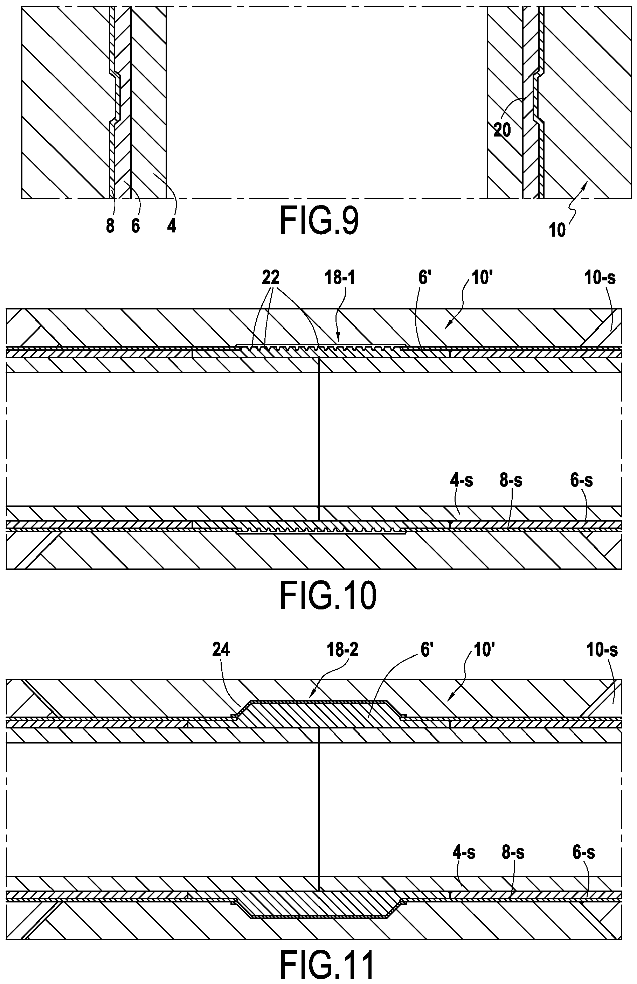

Dans l'exemple de réalisation illustré par la figure 9, les liaisons mécaniques sont réalisées par matriçage annulaire du tube d'étanchéité 8 de la conduite pour former le long de la conduite une pluralité de surfaces annulaires de contact 20 entre le tube d'étanchéité et la couche interne d'isolation électrique 6.

Ces surfaces de contact 20 peuvent être régulièrement espacées ou non le long de la conduite.

Dans un autre exemple de réalisation représenté par les figures 10 et 11, il est possible de réaliser un dimensionnement particulier des connexions effectuées lors de l'assemblage d'un tronçon de conduite 2-t.

Ces connexions peuvent être réalisées à terre préalablement à la campagne d'installation et sont ainsi moins critiques du point de vue du temps de réalisation et de la complexité.

De cette façon, il est possible de jouer sur la forme de certains manchons d'étanchéité pour leur permettre d'assurer une continuité des sections de tube d'étanchéité 8-s de la conduite tout en permettant la transmission des efforts axiaux entre le tube de transport et le tube d'étanchéité.

Dans l'exemple de réalisation de la figure 10, le manchon d'étanchéité 18-1 présente ainsi un crénelage 22 au niveau de sa surface interne en contact avec le raccord de couche interne d'isolation 6'.

Dans l'exemple de réalisation de la figure 11, le manchon d'étanchéité 18-2 présente une forme conique 24 au niveau de sa surface externe, c'est-à-dire en direction du raccord de couche externe d'isolation thermique 10'.

## Revendications

1. Conduite sous-marine chauffante (2) pour le transport de fluides, comprenant une pluralité de sections de conduite (2-s) mises bout à bout par raboutage, chaque section de conduite comprenant :
un tube de transport (4) destiné à recevoir les fluides à transporter,
une couche interne d'isolation électrique (6) disposée autour du tube de transport (4) en le recouvrant,
un tube d'étanchéité (8) réalisé en matériau conducteur de l'électricité, disposé autour de la couche interne d'isolation électrique (6) en la recouvrant,
une couche externe d'isolation thermique (10) disposée autour du tube d'étanchéité (8) en le recouvrant,
la conduite comprenant en outre deux câbles électriques (16a, 16b) raccordés d'une part à un générateur électrique (14) et d'autre part au tube de transport (4) et au tube d'étanchéité (8) de la conduite,
**caractérisé en ce que** :
le tube de transport (4) est relié électriquement au tube d'étanchéité (8) à chacune des deux extrémités de la conduite au moyen de connecteurs électriques annulaires (12), et **en ce que**
les deux câbles électriques (16a, 16b) sont raccordés au tube de transport et au tube d'étanchéité de la conduite en un point situé sensiblement à équidistance des deux extrémités de la conduite de façon à réaliser deux circuits électriques parallèles parcourus chacun par un courant électrique pour chauffer le tube de transport de la conduite par effet Joule.

2. Conduite selon la revendication 1, dans laquelle le tube d'étanchéité (8) est réalisé dans un matériau dont la perméabilité magnétique et la conductivité électrique sont telles que le courant électrique généré par le générateur électrique circule majoritairement le long d'une face interne du tube d'étanchéité.

3. Conduite selon la revendication 2, dans laquelle le tube d'étanchéité (8) est réalisé en acier au carbone.

4. Conduite selon l'une quelconque des revendications 1 à 3, dans laquelle le tube de transport (4) est réalisé en acier au carbone.

5. Conduite selon l'une quelconque des revendications 1 à 4, dans laquelle la couche interne d'isolation électrique (6) est réalisée en polymère.

6. Conduite selon l'une quelconque des revendications 1 à 5, dans laquelle la couche externe d'isolation thermique (10) est réalisée à base de polypropylène, de polyuréthane, de polydicyclopentadiène ou de polystyrène.

7. Conduite selon l'une quelconque des revendications 1 à 6, dans laquelle, pour une section de conduite (2-s) ayant une longueur de 12m à 48m, le tube de transport (4) présente une épaisseur comprise entre 5mm et 50mm, la couche interne d'isolation électrique (6) présente une épaisseur comprise entre 3mm et 15mm, le tube d'étanchéité (8) présente une épaisseur comprise entre 1mm et 10mm, et la couche externe d'isolation thermique (10) présente une épaisseur comprise entre 20mm et 150mm.

8. Conduite selon l'une quelconque des revendications 1 à 7, comprenant en outre une pluralité de liaisons mécaniques (20 ; 22 ; 24) entre les tubes de transport et les tubes d'étanchéité de la conduite afin de permettre la transmission d'efforts axiaux entre ces tubes.

9. Procédé d'assemblage d'une conduite selon l'une quelconque des revendications 1 à 8, comprenant successivement, pour deux sections de conduite (2-s) attenantes :
la mise en place autour du tube d'étanchéité (8) de l'une des deux sections de conduite d'un manchon annulaire d'étanchéité (18) ;
le soudage des tubes de transport (4) respectifs des deux sections de conduite au niveau d'une de leurs extrémités libres ;
le déplacement et le soudage du manchon d'étanchéité (18) aux tubes d'étanchéité (8) respectifs des deux sections de conduite ;
l'insertion d'un raccord de couche interne d'isolation électrique (6') sous le manchon d'étanchéité ; et
la mise en place d'un raccord de couche externe d'isolation thermique (10') autour du manchon d'étanchéité.

10. Procédé selon la revendication 9, comprenant en outre la réalisation d'une pluralité de liaisons mécaniques (20 ; 22 ; 24) entre les tubes de transport et les tubes d'étanchéité de la conduite afin de permettre la transmission d'efforts axiaux entre ces tubes.

11. Procédé selon la revendication 10, dans lequel les liaisons mécaniques sont réalisées par matriçage annulaire des tubes d'étanchéité de la conduite pour former le long de la conduite une pluralité de surfaces annulaires de contact (20) entre les tubes d'étanchéité et les couches internes d'isolation électrique.

12. Procédé selon la revendication 10, dans lequel les liaisons mécaniques sont réalisées par l'intermédiaire de formes particulières de certains manchons d'étanchéité.

13. Procédé selon la revendication 12, dans lequel certains manchons d'étanchéité présentent une forme conique (24) au niveau d'une surface externe.

14. Procédé selon la revendication 12, dans lequel certains manchons d'étanchéité présentent un crénelage (22) au niveau d'une surface interne.

## Patentansprüche

1. Beheizbare Unterwasserleitung (2) zum Transport von Fluiden, umfassend eine Vielzahl von Leitungsabschnitten (2-s), die durch Anstückeln aneinandergefügt sind, jeder Leitungsabschnitt umfassend:
ein Transportrohr (4), das dazu bestimmt ist, zu transportierende Fluide aufzunehmen, eine innere elektrische Isolierschicht (6), die um das Transportrohr (4) herum angeordnet ist und es bedeckt,
ein Dichtungsrohr (8), das aus einem elektrisch leitendem Material hergestellt ist, das um die innere elektrische Isolierschicht (6) herum angeordnet ist und diese bedeckt,
eine äußere wärmeisolierende Schicht (10), die um das Dichtungsrohr (8) herum angeordnet ist und es bedeckt,
die Leitung ferner umfassend zwei elektrische Kabel (16a, 16b), die einerseits mit einem elektrischen Generator (14) und andererseits mit dem Transportrohr (4) und dem Dichtungsrohr (8) der Leitung verbunden sind, **dadurch gekennzeichnet, dass**:
das Transportrohr (4) an jedem der zwei Enden der Leitung mittels ringförmiger elektrischer Verbinder (12) elektrisch mit dem Dichtungsrohr (8) verbunden ist, und dass die zwei elektrischen Kabel (16a, 16b) an einem Punkt mit dem Transportrohr und dem Dichtungsrohr der Leitung verbunden sind, der sich im Wesentlichen in gleichem Abstand von den zwei Enden der Leitung befindet, um zwei parallele elektrische Stromkreise herzustellen, die jeweils von einem elektrischen Strom durchflossen werden, um das Transportrohr der Leitung durch Joule-Effekt zu erwärmen.

2. Leitung nach Anspruch 1, wobei das Dichtungsrohr (8) aus einem Material gefertigt ist, dessen magnetische Permeabilität und elektrische Leitfähigkeit derart sind, dass der von dem elektrischen Generator erzeugte elektrische Strom überwiegend entlang einer Innenseite des Dichtungsrohrs fließt.

3. Rohrleitung nach Anspruch 2, wobei das Dichtungsrohr (8) aus Kohlenstoffstahl hergestellt ist.

4. Rohrleitung nach einem der Ansprüche 1 bis 3, wobei das Transportrohr (4) aus Kohlenstoffstahl hergestellt ist.

5. Leitung nach einem der Ansprüche 1 bis 4, wobei die innere elektrische Isolierungsschicht (6) aus Polymer hergestellt ist.

6. Leitung nach einem der Ansprüche 1 bis 5, wobei die äußere Wärmedämmschicht (10) aus Polypropylen, Polyurethan, Polydicyclopentadien oder Polystyrol hergestellt ist.

7. Leitung nach einem der Ansprüche 1 bis 6, wobei das Transportrohr (4) für einen Leitungsabschnitt (2-s), der eine Länge von 12 m bis 48 m aufweist, eine Stärke zwischen 5 mm und 50 mm aufweist, die innere elektrische Isolationsschicht (6) eine Stärke zwischen 3 mm und 15 mm aufweist, das Dichtungsrohr (8) eine Stärke zwischen 1 mm und 10 mm aufweist und die äußere Wärmedämmschicht (10) eine Stärke zwischen 20 mm und 150 mm aufweist.

8. Leitung nach einem der Ansprüche 1 bis 7, ferner umfassend eine Vielzahl von mechanischen Verbindungen (20; 22; 24) zwischen den Transportrohren und den Dichtungsrohren der Leitung, um die Übertragung von axialen Kräften zwischen diesen Rohren zu ermöglichen.

9. Verfahren zur Montage einer Leitung nach einem der Ansprüche 1 bis 8, umfassend nacheinander Folgendes für zwei aneinandergrenzende Leitungsabschnitte (2-s):
das Anbringen einer ringförmigen Dichtungsmanschette (18) um das Dichtungsrohr (8) von einem der zwei Leitungsabschnitte;
das Verschweißen der jeweiligen Transportrohre (4) der zwei Leitungsabschnitte an einem ihrer freien Enden;
das Verschieben und Verschweißen der Dichtungsmanschette (18) mit den jeweiligen Dichtungsrohren (8) der zwei Leitungsabschnitte;
das Einsetzen eines Verbinders der internen elektrischen Isolierungsschicht (6') unter der Dichtungsmanschette; und
das Anbringen eines Verbinders der äußeren Wärmedämmschicht (10') um die Dichtungsmanschette.

10. Verfahren nach Anspruch 9, ferner umfassend die Herstellung einer Vielzahl von mechanischen Verbindungen (20; 22; 24) zwischen den Transportrohren und den Dichtungsrohren der Leitung, um die Übertragung von axialen Kräften zwischen diesen Rohren zu ermöglichen.

11. Verfahren nach Anspruch 10, wobei die mechanischen Verbindungen durch ringförmige Prägung der Dichtungsrohre der Leitung hergestellt werden, um entlang der Leitung eine Vielzahl von ringförmigen Kontaktflächen (20) zwischen den Dichtungsrohren und den inneren Schichten der elektrischen Isolierung zu bilden.

12. Verfahren nach Anspruch 10, wobei die mechanischen Verbindungen durch besondere Formen bestimmter Dichtungsmanschetten hergestellt werden.

13. Verfahren nach Anspruch 12, wobei einige Dichtungsmanschetten an einer Außenfläche eine konische Form (24) aufweisen.

14. Verfahren nach Anspruch 12, wobei einige Dichtungsmanschetten an einer Innenfläche eine Zahnung (22) aufweisen.

## Claims

1. A heated subsea pipe (2) for transporting fluids, comprising a plurality of pipe sections (2-s) joined end-to-end, each pipe section comprising:
a transport tube (4) for receiving the fluids to be transported,
an electrically insulating inner layer (6) arranged around and covering the transport tube (4),
a sealing tube (8) made of electrically conductive material arranged around and covering the electrically insulating inner layer (6),
a thermally insulating outer layer (10) arranged around and covering the sealing tube (8),
the pipe further comprising two electrical cables (16a, 16b) connected, on the one hand, to an electric generator (14) and, on the other hand, to the transport tube (4) and to the sealing tube (8) of the pipe
**characterized in that**:
the transport tube (4) is electrically connected to the sealing tube (8) at each of the two ends of the pipe by means of electrical connectors (12), and **in that**
the two electrical cables (16a, 16b) are connected to the transport tube and to the sealing tube of the pipe at a point situated approximately equidistant from the two ends of the pipe so as to produce two parallel electrical circuits each traversed by an electric current for heating the transport tube of the pipe by Joule effect.

2. The pipe as claimed in claim 1, wherein the sealing tube (8) is made of a material whose magnetic permeability and electrical conductivity are such that the electric current generated by the electric generator flows predominantly along an inner surface of the sealing tube.

3. The pipe as claimed in claim 2, wherein the sealing tube (8) is made of carbon steel.

4. The pipe as claimed in any one of claims 1 to 3, wherein the transport tube (4) is made of carbon steel.

5. The pipe as claimed in any one of claims 1 to 4, wherein the electrically insulating inner layer (6) is made of polymer.

6. The pipe as claimed in any one of claims 1 to 5, wherein the thermally insulating outer layer (10) is made of polypropylene, polyurethane, polydicyclopentadiene or polystyrene.

7. The pipe as claimed in any one of claims 1 to 6, wherein, for a pipe section (2-s) having a length of 12 m to 48 m, the transport tube (4) has a thickness comprised between 5 mm and 50 mm, the electrically insulating inner layer (6) has a thickness comprised between 3 mm and 15 mm, the sealing tube (8) has a thickness comprised between 1 mm and 10 mm, and the thermally insulating outer layer (10) has a thickness comprised between 20 mm and 150 mm.

8. The pipe as claimed in any one of claims 1 to 7, further comprising a plurality of mechanical connections (20; 22; 24) between the transport tubes and the sealing tubes of the pipe in order to allow the transmission of axial forces between these tubes.

9. A process for assembling a pipe as claimed in any one of claims 1 to 8, comprising successively, for two adjoining pipe sections (2-s):
placing around the sealing tube (8) of one of the two pipe sections an annular sealing sleeve (18);
welding the respective transport tubes (4) of the two pipe sections at one of their free ends;
moving and welding the sealing sleeve (18) to the respective sealing tubes (8) of the two pipe sections;
inserting an electrically insulating inner layer connection (6') under the sealing sleeve; and
placing a thermally insulating outer layer connection (10') around the sealing sleeve.

10. The process as claimed in claim 9, further comprising making a plurality of mechanical connections (20; 22; 24) between the transport tubes and the sealing tubes of the pipe to allow the transmission of axial forces between these tubes.

11. The process as claimed in claim 10, wherein the mechanical connections are made by annularly stamping the sealing tubes of the pipe to form a plurality of annular contact surfaces (20) along the pipe between the sealing tubes and the electrically insulating inner layers.

12. The process as claimed in claim 10, wherein the mechanical connections are made through particular shapes of certain sealing sleeves.

13. The process as claimed in claim 12, wherein certain sealing sleeves have a conical shape (24) at an outer surface.

14. The process as claimed in claim 12, wherein certain sealing sleeves have a notch (22) at an inner surface.
